# EUROPEAN PATENT SPECIFICATION

(11) **EP 2 827 007 B1**
(45) Date of publication and mention of the grant of the patent: **04.01.2017**
(21) Application number: 14176150.2
(22) Date of filing: 08.07.2014
(51) Int. Cl.: F16B 21/02, F16B 7/20

(54) **Fastening device rotationally connecting one profile on another profile or plane**
Befestigungsvorrichtung mit Drehverbindung eines Profils zu einem weiteren Profil oder einer Ebene
Dispositif de fixation reliant de manière rotative un profilé à un autre profil ou plan

(30) Priority: 17.07.2013 TR 201308678
(43) Date of publication of application: 21.01.2015
(73) Proprietor: Ores Tanitim Sistemleri Sanayi ve Ticaret Limited Sirketi, Istanbul (TR)
(72) Inventor: Yurttagüler, Umutcan, Istanbul (TR)
(74) Representative: Dereligil, Ersin

(56) References cited:
- US-A- 2 867 025
- US-A- 3 443 783
- US-A- 5 018 901
- US-A- 5 597 260
- "FASTENING SYSTEM", IBM TECHNICAL DISCLOSURE BULLETIN, INTERNATIONAL BUSINESS MACHINES CORP. (THORNWOOD), US, vol. 35, no. 6, 1 November 1992 (1992-11-01), pages 129-130, XP000314084, ISSN: 0018-8689

## Description

### TECHNICAL FIELD

The invention relates to an apparatus which connects two profiles required to be
interconnected with a single twisting movement in any place and provides the disconnection thereof by disassembling again with a single movement when desired.

The invention especially relates to a profile fastening device which easily interconnects the profiles required to be connected by means of two apparatus, a female apparatus attached to one of
the profiles and the a apparatus attached to the other profile or ground.

### PRIOR ART

Today, the interconnection of the cylindrical or geometrical profiles is performed by connecting the profiles through welding and screwing of a piece fitting to the inside or outside of one of the profiles.

The drawbacks of the connection by welding are listed as follows:
- There is a need for expert qualified personnel. Therefore, there is an extra labor cost.
- The process takes a long time, which in turn affects the production time negatively.
- During the connection by welding, the profiles are subjected to deformation (expansion-surface deformation) due to heat.
- Profiles that are interconnected by welding are impossible to demount.

In the connection by screwing, however, screw heads are seen on the outer surface and screwing process takes a long time. Time is especially very important for the structures installed in the fair and exhibition areas as short time installation is required. Although the duration is shortened thanks to the cable or chargeable screwing tools for screwing, providing electricity to the installation area or the tool being discharged during the installation causes problems.

US-A-5 597 260 relates to a releasable connecting pin for a shackle or the like with pin (45) having a cylindrical body (46) with a head (47) at one end and a boss (48) at the other end. The boss comprises a cylindrical neck (49) and spaced radially extending projections (50a, 50b, 50c) in the form of a male coupling element cooperating with a female coupling element comprises apertured flange plates (51, 52) having apertures (53) of a shape complementary to the cross sectional shape of the boss (48) through the projections (50a, 50b, 50c) to permit the flange plates (51, 52) to slide over the boss (48).

In conclusion, in parallel with the developing technology, developments are being made in the profile fastening devices; therefore, new embodiments which will eliminate the aforementioned disadvantages and offer solution to the existing systems are needed.

### OBJECT OF THE INVENTION

The present invention relates to a profile fastening device which meets the aforementioned requirements, eliminates all the disadvantages and offers some additional advantages.

The object of the invention is to provide a connection of a cylindrical or geometrical profile to another profile or ground by twisting with a single movement. Thus, the mounting processes will be facilitated and the time will be saved.

Another object of the invention is to secure the connection by forming a profile or a large grip surface
on the profile.

Another object of the invention is to eliminate stretching and spaces thanks to the complete fastening of the profiles when mounted to each other.

Another object of the invention is to provide mounting and demounting immediately when needed thanks to the structure thereof.

In order to achieve the objects above, a fastening device is developed which provides vertical or horizontal connection of a slotted, cylindrical or angled profile to a slotted, cylindrical or angled profile
or a ground; comprising a male plate positioned on said profile or locking member mounted onto the
ground, a female plate mounted on said other profile and comprising a locking member slot formed
thereon through which the locking member can pass, and a locking member lifting component
positioned between said locking member and said male plate or ground, forming a space between male plate or ground, and having the same thickness as that of the female plate.

In an embodiment of the invention, said locking member lifting component has a washer form. In an embodiment of the invention, a movement retention member is provided which is positioned on said female plate and limits the movement thereof when said female plate is rotated.

In an embodiment of the invention, a movement retention channel is provided which is formed on said profile and limits the movement of the female plate when said female plate is rotated.

In an embodiment of the invention, said locking member comprises a middle area and at least one lug positioned by the side of the middle area; said locking member slot comprises a middle area through which the middle area of the locking member can pass and a lug fitting hole through which
said lug can pass.

The structural and characteristic features and all the advantages of the present invention will be more clearly understood thanks to the figures below and the detailed description written with reference to those figures. Therefore, the evaluation needs to be done by taking said figures and the detailed description into consideration.

### BRIEF DESCRIPTION OF THE FIGURES FACILITATING UNDERSTANDING OF THE INVENTION

Figure - 1 illustrates lower two-dimensional view of an (upper) profile where the plates can be fastened.
Figure - 2 illustrates two-dimensional view of the male plate.
Figure - 3 illustrates upper view of the butterfly lock to be attached to the male plate or ground.
Figure - 4 illustrates perspective view of the male plate mounted to the profile.
Figure - 5 illustrates upper two-dimensional view of the female plate.
Figure - 6 illustrates perspective view of the female plate mounted to the profile.
Figure - 7 is the lateral cross-sectional view of the male plate and the butterfly lock applied to the profile.
Figure - 8 illustrates lateral two-dimensional view of the female plate to which stop pin is fitted.
Figure - 9 is the perspective view of the male apparatus installed on the ground.
Figure - 10 is the upper cross-sectional view of the profile which is used in a preferred embodiment of the invention and where the movement retention channels are seen.

### REFERENCE NUMBERS

- **10.**: Male plate
- **11.**: Connection member holes
- **12.**: Male plate mounting holes
- **13.**: Locking member mounting holes
- **14.**: Connection member
- **15.**: Locking member
151. Middle area
152. Lug
- **16.**: Locking member lifting component
- **17.**: Profile connection member
- **20.**: Female plate
- **21.**: Locking member slot
211. Middle area
212. Lug fitting hole
- **22.**: Connection member holes
- **23.**: Movement retention member
- **24.**: Movement retention member hole
- **25.**: Profile connection member
- **30.**: Ground
- **40, 40'.**: Profile
- **41.**: Profile connection member channel
- **42.**: Movement retention channel
- **50.**: Male apparatus
- **60.**: Female apparatus

### DETAILED DESCRIPTION OF AN EXAMPLE OF THE INVENTION

In this detailed description, the preferred embodiments of the fastening device according to the invention are described only for a better understanding of the invention.

The fastening device according to the invention is developed in order to facilitate the fastening of a slotted, cylindrical or angled (quadrangle, hexagon, octagon, etc.) profile (40) to another slotted, cylindrical or angled (quadrangle, hexagon, octagon, etc.) profile (40') or a ground (30).

The fastening device according to the invention consists of three main components as locking member (15), female plate (20) and male plate (10), female plate (20) and locking member lifting component (16). Said locking member (15) comprises a middle area (151) and at least one lug (152) positioned by the side of the middle area (151). Said locking member slot (21) comprises a middle area (211) through which the middle area (151) of the locking member can pass and lug fitting hole (212) through which said lug(152) can pass. The locking member (15) and the locking member slot (21) are preferably in the form of butterfly or bow.

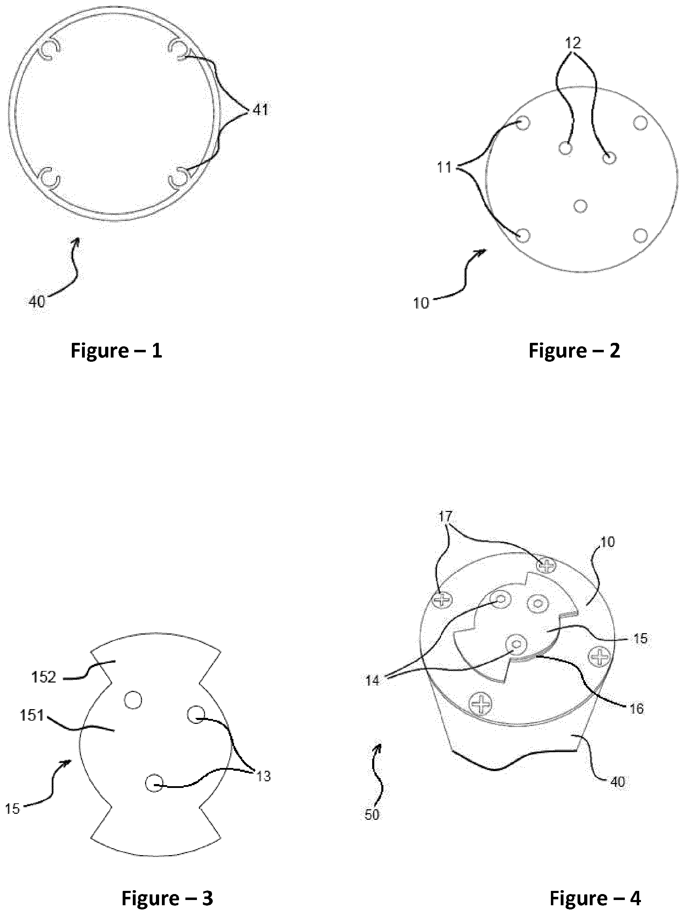

Figure 1 illustrates the connection member channels (41) on the profile (40) where the female and male plates (10,20) will be fastened. The profile connection member channel (41) is the screw hole which provides the female plate(20) and the male plate (10) to be fastened to the profiles (40, 40') by means of the profile connection members (25).

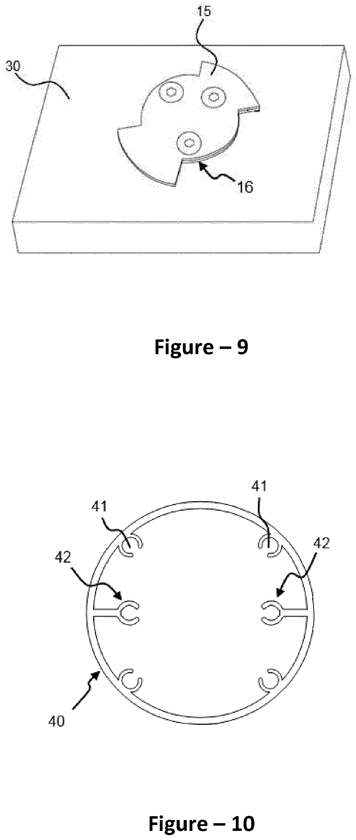

As the female plate (20) can be fitted to the locking member (15) which is fastened to the male plate (10), it can be fitted on the carrier ground (30) on which only the locking member (15) is fastened. Figure 9 illustrates the perspective view of the locking member (15) fastened on the ground (30). Figure 2 is the two-dimensional view of the male plate (10).

Drilling a counterbore is absolutely needed for fastening the connection members (14) in the female and male plates (20, 10). The connection members (14) will be used as countersunk head and a counterbore will be drilled in these holes for not preventing rotation. Upon fastening to the profile (40,40'), the connection members should not create a protrusion or height.

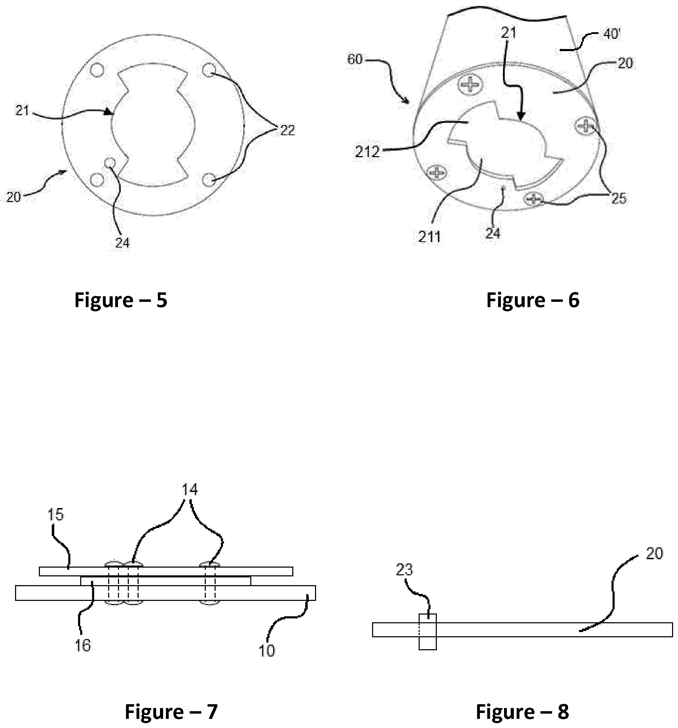

A locking member slot (21) allowing the locking member (15) to pass therethrough is required to
be provided in the female plate (20) attached in order to form a ground in one side of the profile (40) for connecting the profiles (40, 40'). In order for the locking member (15) to pass through the locking member slot (21), at least 0.2 mm distance should be provided therebetween. Figure 5 illustrates the upper two-dimensional view of the female plate (20) comprising locking member slot (21).

A locking member lifting component (16) in the form of a washer is provided which provides height under the butterfly locking member (15) attached on the male plate (10) or the flat ground (30). The thickness of said lifting component (16) should be the same as that of the female plate (20). It helps the butterfly locking member (15) which provides locking, in fastening the profile (40) by rotating in the female plate (20). Perspective view of the locking member lifting component (16) applied in the male plate (10) in Figure 7 and on the ground (30) in Figure 9 is seen.

Mounting process of the fastening device according to the invention is as follows:
If the connection process of the two profiles (40, 40') will be performed, one of these profiles (40, 40') should be the one where female plate (20) will be attached and the other should be the one where male plate (10) will be attached. The profile connection member channels (41) which provide fastening of the male plate (10) or the female plate (20) on the two profiles (40, 40') are provided. The male plate (10) is fastened to the connection member channels (41) through the connection member holes (11) by means of the profile connection members (17). Then, the male plate mounting holes (12) in the male plate (10) and the locking member mounting holes (13) of the locking member (15) seen in Figure 3, are superimposed, and with the attachment of the connection member (14) to these mounting holes (12, 13) the mounting of the profile (40), which will serve as the male apparatus (50), is completed. The locking member lifting component (16) having the same thickness as that of the female plate (20) is placed between the locking member (15) and the male plate (10).

The female plate (20) seen in Figure 5, however, is fastened to the other profile (40') again by passing the profile connection members (25) through the connection holes (22). Subsequent to this process, the female apparatus is also made ready. Figure 6 illustrates perspective view of the female plate (20).

If the profile (40) will be fastened on the ground (30), male apparatus (50) will be formed on the ground (30). However, here the male plate (10) is not used. Similar to the aforementioned fastening process of the locking member (15) to the other profile (40'), the butterfly lock member (15) is fastened on the ground. Again, the locking member lifting component (16) is positioned between the ground (30) and the locking member (15). With these processes, the male apparatus (50) to be used on the ground (plane) is made ready. Figure 9 is the perspective view of the male apparatus (50) installed on the ground (30).

During locking the female plate (20) on the other profile (40) will be fitted to the male apparatus (50) which is to be used as carrier and is formed on the ground (30) or the profile (40'). During this process, primarily, the locking member (15) is fitted inside the female plate (20) such that the middle area (151) of the locking member (15) will pass through the middle area (211) of the locking member slot (21); and the lug (152) will pass through the lug fitting hole (212). Then, the mounting is provided with a rotation up to 90 degrees.

The components which provide rotating and fastening and the properties are as follows: Primarily, thanks to having the same thickness as that of the female plate (20), the locking member lifting component (16) forms a movement area between the locking member (15) and the profile (40,40'), to which it will be fastened, where the female plate (20) can be rotated. However, after the rotation, as the lugs (152) of the locking member (15) correspond to the top of the area where lug fitting hole (212) of the female plate (21) is not provided, the female plate (21) cannot be released from the locking member (15).

Moreover, if the female plate (20) is to be stopped at a desired angle, a movement retention member hole (23) is drilled on said female plate (20). The movement retention member hole (23) should be drilled on the direction of the lug fitting hole (212) while rotating. The movement retention member (24), which is preferably a pin, is positioned inside said movement retention member hole (23). Thus, during the rotation of the profile (40) to which the female plate (20) is connected, the movement retention member (24), namely pin, hits the lug (152) of the locking member (15) and the movement of the female plate (20) is limited at a desired point.

In an alternative embodiment of the invention, instead of the pin used as the movement retention member (24), movement retention channel or channels (42) formed on the profile (40) can be used (Figure 9). In this situation, as the movement retention member (24) will not be used, there will be no need to drill a movement retention member hole (23) on the female plate (20). The movement retention channels (42) have a similar form with the profile connection member channels (41), wherein their difference from the profile connection member channels (41) is that the movement retention channels (42) are also positioned on top of the area of the lug fitting hole (23) direction as the movement retention member hole (23) and the pin. Thus, as in the embodiment with pin, subsequent to the interconnection of the female apparatus (60) and male apparatus (50), while the profile (40), to which the female plate (20) is connected, is rotated, the movement retention channels (42) hit the lug (152) of the locking member (15) and limit the full rotation (180 degrees) of the female plate (20) and locking is provided.

## Claims

1. A profile fastening device which provides vertical or horizontal connection of a cylindrical or geometrical; slotted, cylindrical or angled profile (40) to another slotted, cylindrical or angled
profile (40') or a ground (30), **characterized in** comprising
- a male plate (10) onto which a locking member (15) is mounted, positioned on said profile
(40) or the locking member (15) mounted on the ground (30);
- a female plate (20) mounted onto said other profile (40') and comprising a locking member
slot (21) formed thereon through which the locking member (15) can pass;
- a locking member lifting component (16) positioned between said locking member (15) and said male plate (10) or ground (30), forming a space between the male plate (10) or the ground (30), having the same thickness as that of the female plate (10).

2. The fastening device according to Claim 1, **characterized in that** said locking member lifting component (16) has a washer form.

3. The fastening device according to Claim 1, **characterized in** comprising a movement retention member (23) positioned on said female plate (20) and limiting the movement of the female plate (20) when said female plate (20) is rotated.

4. The fastening device according to Claim 1, **characterized in** comprising a movement retention channel (42) formed on said profile (40) and limiting the movement of the female plate (20) when said female plate (20) is rotated.

5. The fastening device according to Claim 1, **characterized in that;**
- said locking member (15) comprises a middle area (151) and at least one lug (152) positioned at the side of the middle area (151);
- said locking member slot (21) comprises a middle area (211) through which the middle area (151) of the locking member can pass and lug fitting hole (212) through which said lug (152) can pass.

## Patentansprüche

1. Profilbefestigungsvorrichtung, die für eine vertikale oder horizontale Verbindung eines zylindrischen oder geometrischen; geschlitzten, zylindrischen oder gewinkelten Profils (40) mit einem anderen geschlitzten, zylindrischen oder gewinkelten Profil (40') oder Boden (30) sorgt, **dadurch gekennzeichnet, dass** sie umfasst:
- eine Patrize (10), auf der ein Sperrelement (15) montiert ist, positioniert auf dem Profil (40) oder dem Sperrelement (15), das auf dem Boden (30) befestigt ist;
- eine Matrize (20), die auf dem anderen Profil (40') befestigt ist und einen Sperrelementschlitz (21) umfasst, der darauf gebildet ist, durch welchen das Sperrelement (15) passieren kann;
- eine Hubkomponente (16) für das Sperrelement, das zwischen dem Sperrelement (15) und der Patrize (10) oder dem Boden (30) positioniert ist, das einen Raum zwischen der Patrize (10) oder dem Boden (30) bildet, der die gleiche Dicke wie die Matrize (10) hat.

2. Befestigungsvorrichtung nach Anspruch 1, **dadurch gekennzeichnet, dass** die Hubkomponente (16) für das Sperrelement die Form einer Unterlagscheibe hat.

3. Befestigungsvorrichtung nach Anspruch 1, **dadurch gekennzeichnet, dass** sie ein Bewegungsbeibehaltungselement (23) umfasst, das auf der Matrize (20) positioniert ist und die Bewegung der Matrize (20) beschränkt, wenn die Matrize (20) gedreht wird.

4. Befestigungsvorrichtung nach Anspruch 1, **dadurch gekennzeichnet, dass** sie einen Bewegungsbeibehaltungskanal (42) umfasst, der auf dem Profil (40) gebildet ist und die Bewegung der Matrize (20) beschränkt, wenn die Matrize (20) gedreht wird.

5. Befestigungsvorrichtung nach Anspruch 1, **dadurch gekennzeichnet, dass**
- das Sperrelement (15) eine mittlere Fläche (151) und mindestens eine Öse (152) umfasst, die an der Seite der mittleren Fläche (151) positioniert ist;
- der Sperrelementschlitz (21) eine mittlere Fläche (211) umfasst, durch die die mittlere Fläche (151) des Sperrelementes passieren kann, und ein Ösenpassloch (212), durch welches die Öse (152) passieren kann.

## Revendications

1. Dispositif de fixation de profilés assurant une connexion verticale ou horizontale entre un profilé cylindrique ou géométrique ; à fente, cylindrique ou en équerre (40) et un autre profilé à fente, cylindrique ou en équerre (40') ou un sol (30), **caractérisé en ce qu'**il comprend
- un plateau mâle (10) sur lequel est monté un élément de verrouillage (15), positionné sur ledit profilé (40), ou l'élément de verrouillage (15) étant monté sur le sol (30) ;
- un plateau femelle (20) monté sur ledit autre profilé (40') et comprenant une fente d'élément de verrouillage (21) formée dans celui-ci, à travers laquelle l'élément de verrouillage (15) peut passer ;
- un composant d'élévation d'élément de verrouillage (16) positionné entre ledit élément de verrouillage (15) et ledit plateau mâle (10) ou le sol (30), formant un espace entre le plateau mâle (10) ou le sol (30), présentant la même épaisseur que celui du plateau femelle (20).

2. Dispositif de fixation selon la revendication 1, **caractérisé en ce que** ledit composant d'élévation d'élément de verrouillage (16) présente une forme de rondelle.

3. Dispositif de fixation selon la revendication 1, **caractérisé en ce qu'**il comprend un élément de restriction de mouvement (23) positionné sur ledit plateau femelle (20) et limitant le mouvement du plateau femelle (20) lorsque ledit plateau femelle (20) est mis en rotation.

4. Dispositif de fixation selon la revendication 1, **caractérisé en ce qu'**il comprend un canal de restriction de mouvement (42) formé sur ledit profilé (40) et limitant le mouvement du plateau femelle (20) lorsque ledit plateau femelle (20) est mis en rotation.

5. Dispositif de fixation selon la revendication 1, **caractérisé en ce que**
- ledit élément de verrouillage (15) comprend une zone médiane (151) et au moins un ergot (152) positionné sur le côté de la zone médiane (151) ;
- ladite fente d'élément de verrouillage (21) comprend une zone médiane (211) à travers laquelle la zone médiane (151) de l'élément de verrouillage peut passer, et un trou de montage d'ergot (212) à travers lequel ledit ergot (152) peut passer.
